Europäisches Patentamt

European Patent Office

Office européen des brevets

(11) Veröffentlichungsnummer: **0 510 702 A1**

# EUROPÄISCHE PATENTANMELDUNG

(21) Anmeldenummer: **92107103.1**

(22) Anmeldetag: **24.04.92**

(51) Int. Cl.5: **B29C 51/10**, B29C 51/26, B29C 51/24

(30) Priorität: **25.04.91 DE 4113568**

(43) Veröffentlichungstag der Anmeldung:
**28.10.92 Patentblatt 92/44**

(84) Benannte Vertragsstaaten:
**AT CH DE ES FR IT LI SE**

(71) Anmelder: **Niebling, Curt**
**Seeshaupter Strasse 58**
**W-8122 Penzberg(DE)**

(72) Erfinder: **Niebling, Curt**
**Seeshaupter Strasse 58**
**W-8122 Penzberg(DE)**

(74) Vertreter: **Brehm, Hans-Peter, Dr. Dipl.-Chem.**
**Patentanwälte Kern, Brehm & Partner**
**Albert-Rosshaupter-Strasse 73**
**W-8000 München 70(DE)**

(54) Vorrichtung zur Hochdruckverformung von Kunststoff-Folien.

(57) Kunststoff-Folien mit einer Schichtdicke zwischen 0,05 und 2,5 mm werden unterhalb der Kunststoff-Erweichungstemperatur mit einem fluiden Druckmittel beaufschlagt und unter einem Druckmitteldruck größer 20 bar isostatisch verformt. Eine dafür vorgesehene automatisch arbeitende Vorrichtung weist wenigstens auf:
- einen durchgehenden Strang (6) verschieblicher, rahmenartiger Paletten (5), die von einem Förderer (11') schrittweise angetrieben werden;
- eine Auflegestation (20), in welche je eine zu verformende Folie (3) in definierter Anordnung auf je einer Palette (5) angeordnet wird;
- eine Heizstation (40), in welcher jede Folie (3) auf eine vorgegebene Temperatur erwärmt wird;
- eine Formstation (50) mit einem Formwerkzeug (51), das innerhalb einer Presse (70) angeordnet ist, deren Antrieb (100) erhebliche Formschließkraft gewährleistet;
- eine Entnahmestation (160), in welcher die verformte Folie (4) von der sie haltenden Palette (5) gelöst wird und in einen Sammelbehälter (163) gelangt; und
- eine Quelle für unter erhöhtem Druck gehaltenes fluides Druckmittel, insbesondere Druckluft.

Fig.2

EP 0 510 702 A1

Die Erfindung betrifft eine Vorrichtung zur Hochdruckverformung von Kunststoff-Folien, wobei die Folien unterhalb der Kunststoff-Erweichungstemperatur mit einem fluiden Druckmittel beaufschlagt und unter einem Druckmitteldruck größer 20 bar isostatisch verformt werden.

Ein Verfahren dieser Art ist in dem Dokumunt EP 0 371 425 A2 beschrieben. Dort werden u.a. geeignete Folienmaterialien und -schichtdicken, insbesondere der Einsatz bedruckter oder beschichteter Folien, die Wahl der Verfahrenstemperatur, des Verformungsdruckes, des Druckmittels und weitere Verfahrensmaßnahmen im einzelnen dargelegt. Um Wiederholungen zu vermeiden, wird hinsichtlich dieser und weiterer Angaben ausdrücklich auf das Dokument EP 0 371 425 A2 verwiesen; mit dieser ausdrücklichen Bezugnahme soll der Inhalt dieses Dokumentes auch zum Bestandteil der vorliegenden Unterlagen gemacht werden.

Die in diesem Dokument erwähnten Vorrichtungen zur Durchführung der isostatischen Hochdruckverformung von Kunststoff-Folien sehen ein Formwerkzeug vor, das von einer Bedienungsperson mit der zu verformenden Folie beschickt und in jedem einzelnen Arbeitsschritt gesteuert werden muß. Eine automatisierte Fertigung ist mit den bekannten Vorrichtungen nicht möglich.

Weiterhin offenbart das Dokument US-A-4,842,668 ein Verfahren zur Herstellung laminierter Kunststoffprodukte. Bei diesem bekannten Verfahren wird je ein Stapel aus übereinander angeordneten Schichten aus wärmehärtendem Material, beispielsweise Papierbögen, die mit Kunstharz imprägniert sind, auf einer steifen rahmenartigen Transporteinrichtung angeordnet. Diese mit je einem Stapel beschickten Transporteinrichtungen werden nacheinander durch einen Vorheizofen, durch eine Warmformpresse und eine Trennstation geführt, in welcher das geformte laminierte Kunststoffprodukt, beispielsweise ein Tablett für Kantinen und dergleichen, von der Transporteinrichtung gelöst wird. Das Kunststoffprodukt gelangt in einen Sammelbehälter, und die Transporteinrichtungen werden zum Ausgangspunkt des Verfahrens zurückgeführt, um erneut Stapel aus dem zu verformenden Material aufzunehmen.

Die Aufgabe der Erfindung besteht darin, eine automatisierte Vorrichtung zur Hochdruckverformung von Kunststoff-Folien bereitzustellen, die hohe Präzision im 1/10 mm-Bereich und Taktzeiten von mehr als 20 Folienverformungen pro Minute gewährleistet, wenn Folien mit einer Schichtdicke zwischen 0,05 und 2,00 mm unterhalb der Kunststoff-Erweichungstermperatur mit einem fluiden Druckmittel beaufschlagt und unter einem Druckmitteldruck größer 20 bar isostatisch verformt werden.

Nach einer vorteilhaften Ausgestaltung soll die neue, automatisierte Vorrichtung zusätzlich mit wenigstens einer Stanzeinrichtung ausgerüstet sein.

Die erfindungsgemäße Lösung dieser Aufgabe ist eine Vorrichtung zur Hochdruckverformung von Kunststoff-Folien, mit einem durchgehenden Strang verschieblicher, rahmenartiger Paletten, die von einem Förderer schrittweise angetrieben werden, wobei jede Palette nacheinander durchläuft:

- eine Auflegestation, in welcher je eine Folie in definierter Anordnung auf je einer Palette abgelegt wird, welche die Folie in dieser definierten Anordnung hält und schrittweise durch die weiteren Stationen transportiert;
- eine Heizstation, in welcher jede Folie auf eine vorgegebene Temperatur erwärmt wird;
- eine Formstation mit einem oberen, im wesentlichen ortsfest angeordneten Formtisch und mit einem unteren, verschieblich gehaltenen Formtisch, der eine Schließstellung benachbart zum oberen Formtisch und eine Freigabestellung entfernt vom oberen Formtisch einnehmen kann,

  wobei an jedem Formtisch je eine Werkzeughälfte eines Formwerkzeuges angebracht ist, an dessen Kontur die Folie angeformt werden soll, wobei

  - in einer anfänglichen Freigabestellung eine Palette mit einer Folie zwischen die beiden im Abstand zueinander gehaltenen Werkzeughälften einschiebbar ist;
  - in der Schließstellung die zu verformende Folie zwischen den beiden Werkzeughälften eingespannt ist,

    die Werkzeughälften druckdicht geschlossen sind, und

    in eine Formmulde in der einen Werkzeughälfte ein fluides Druckmittel einführbar ist, das die, eine Temperatur unterhalb der Kunststofferweichungstemperatur aufweisende Folie unter einem Druckmitteldruck größer 20 bar an ein Werkzeug und/oder an einen Formhohlraum in der anderen Werkzeughälfte anformt, und

  - in einer erneuten Freigabestellung die verformte Folie von dem Formwerkzeug gelöst und die Palette mit der verformten Folie weitertransportiert wird;
- eine Entnahmestation, in welcher die verformte Folie von der sie haltenden Palette gelöst und in einer Sammelrichtung aufgenommen wird; und
- wahlweise wenigstens eine Stanzstation, die zwischen der Formstation und der Entnahmestation eingefügt ist.

Die erfindungsgemäße Vorrichtung ermöglicht die präzise und automatisierte Hochdruckverformung von Kunststoff-Folien um Ziehteile zu erzeugen, die eine dauerhafte Verformung aufweisen.

Die eingesetzten Ausgangsfolien sind typischerweise eben und weisen eine Schichtdicke zwischen 0,05 und 2,0 mm auf. Vorzugsweise sind diese Ausgangsfolien mit Motiven, Abbildungen, Symbolen und/oder sonstigen Markierungen versehen, die aufgedruckt oder als Beschichtung aufgebracht sind. Die Besonderheit der hier angesprochenen Hochdruckververformung besteht gerade darin, daß eine Verformung im Bereich des Aufdruckes oder der Beschichtung vorgenommen werden kann, ohne daß eine Verzerrung des jeweiligen Bildes oder Motives erfolgt. Die erfindungsgemäße Vorrichtung gewährleistet eine automatisierte Verformung entsprechend einer vorgegebenen Kontur exakt an der gewünschten Stelle ohne Verzerrung eines vorhandenen Bildes oder Motives in automatisierter Form bei hohen Taktzeiten, von wenigstens 20 Verformungsschritten pro Minute. Eine beispielhafte Ausführungsform einer erfindungsgemäßen Vorrichtung schafft Taktzeiten von 30 Verformungsschritten pro Minute. Die mit der erfindungsgemäßen Vorrichtung hergestellten Ziehteile werden insbesondere in Kraftfahrzeugen eingesetzt und bilden dort beispielsweise Gehäuseteile, Leuchtzeichen- oder Instrumenten-Abdeckungen, beleuchtbare Druck- oder Schaltertasten, Heizblenden, Armaturenbrett-Abschnitte oder Rückleuchtenlinsen oder die Deckschichten solcher Kunststoffteile und weisen typischerweise unterschiedlich gefärbte und/oder transparente Wandabschnitte auf. Bei Bedarf können die mit der erfindungsgemäßen Vorrichtung hergestellten Ziehteile zusätzlich mit weiterem Kunststoff verstärkt werden.

Vorteilhafte Ausgestaltungen und Weiterbildungen der erfindungsgemäßen Vorrichtung ergeben sich aus den Unteransprüchen.

So kann jede Palette vorzugsweise im wesentlichen aus einer flachen, rahmenartigen, rechteckigen Blechtafel bestehen, an der wenigstens eine Aussparung ausgebildet ist, und die an den gegenüberliegenden Schmalseiten auf je einem Palettenhalter aufliegt und dort mit einem lösbaren Befestigungsmittel festgelegt ist. Als Befestigungsmittel kommen insbesondere schnell und einfach lösbare Befestigungsmittel wie etwa Bajonettverschlüsse in Betracht, weil bei einem Formenwechsel in der Regel auch sämtliche Paletten der Vorrichtung ausgetauscht und angepaßt werden müssen. Die beiden gegenüber und im Abstand zueinander angeordneten Palettenhalter sind an je einer umlaufenden Kette angebracht, die parallel und im Abstand zueinander geführt sind. Der Antrieb der Ketten erfolgt vorzugsweise über ein Schrittgetriebe und einen Drehstrommotor.

Jede Palette weist wenigstens eine Aussparung auf, welche von der zu verformenden Folie überdeckt ist. Die Palette selbst wird nicht in das Formwerkzeug eingespannt, wird jedoch durch Anlage von passenden Abschnitten am Außenumfang des Formwerkzeugs an passenden Abschnitten am Innenumfang der Palettenaussparung gegenüber dem Formwerkzeug zentriert und auf einige wenige 1/10 Millimeter genau bezüglich des Formwerkzeugs angeordnet. Eine Palette kann eine oder mehrere Aussparungen für die gleichzeitige Verformung von einem oder mehreren Folienabschnitt(en) aufweisen. Typischerweise können die Paletten aus Stahlblech bestehen, das im Bereich der beiden quer zur Förderrichtung verlaufenden Längsseiten-Randabschnitte abgewinkelt ist, um eine höhere Stabilität zu gewährleisten.

Vorzugsweise stehen von der Oberseite des Metallrahmens jeder Palette wenigstens zwei Zentrierstifte ab, die in passende Öffnungen oder Aussparungen an der zu verformenden Folie eingreifen, um eine definierte Anordnung der Folie bezüglich der Palette zu gewährleisten. Mit zwei Zentrierstiften kann die Folie verschiebungsfrei auf der Palette angeordnet werden.

Die paßgenaue Anordnung je einer zu verformenden Folie auf je einer Palette erfolgt in der Auflegestation. Hierzu wird der schrittweise vorwärts bewegte Strang aus Paletten jeweils kurzfristig angehalten und auf der in der Auflegestation befindlichen Palette wird eine Folie abgelegt. Das Ablegen der Folie kann von Hand durchgeführt werden.

Vorzugsweise ist jedoch eine automatisierte Auflegestation vorgesehen, die ein, eine Vielzahl von Folien enthaltendes Magazin und eine dreh- und schwenkbar angeordnete, mit Saugern versehene Vorrichtung aufweist. Diese Vorrichtung packt pro Arbeitstakt die jeweils im Magazin endständige Folie, entnimmt diese Folie aus dem Magazin und legt sie auf der in der Auflegestation befindlichen Palette ab. Eine paßgenaue Anordnung wird mit Hilfe der Zentrierstifte an der Palette und entsprechenden Öffnungen/Aussparungen an der Folie gewährleistet.

Es ist wünschenswert, die zu verformende Folie mit einer definierten Folientemperatur der isostatischen Hochdruckverformung zuzuführen. Hierzu weist die erfindungsgemäße Vorrichtung eine Heizstation auf, die längs des Palettenstrangweges zwischen Auflegestation und Formstation angeordnet ist. Typischerweise werden die Folien mit einer Folientemperatur von etwa 30 bis 40°C in die Formstation eingeführt; im Einzelfalle können jedoch auch Folientemperaturen von beispielsweise 60°C und mehr vorgesehen werden.

Vorzugsweise ist eine Heizstation vorgesehen, die pro Arbeitstakt mehrere Paletten mit je einer zu verformenden Folie aufnehmen kann. Gut bewährt hat sich beispielsweise eine Heizstation, die drei Paletten umfaßt. Trotz der vergleichsweise hohen Taktgeschwindigkeit und der entsprechend geringen Verweildauer in der Heizstation kann die gewünschte Folientemperatur mit einer Schwankungsbreite von etwa 1 bis 2° C eingestellt werden.

Vorzugsweise weist die Heizstation mehrere, beispielsweise drei Heizfelder auf, die ihrerseits aus je einer Anzahl Infrarot-Flächenstrahlern aufgebaut sind. Jedes Heizfeld weist wenigstens einige unabhängig ansteuerbare Infrarot-Flächenstrahler auf. Beispielsweise können jeweils die randständigen Infrarot-Flächenstrahler unabhängig ansteuerbar sein. Zusätzlich weist die Heizstation wenigstens einen Pilotstrahler auf, dessen Oberflächentemperatur mit Hilfe eines Thermoelementes in engen Grenzen gehalten werden kann. Dieser Pilotstrahler liefert Steuerimpulse zur Ansteuerung der unabhängig ansteuerbaren Infrarot-Flächenstrahler.

Diese Heizfelder sind vorzugsweise an einem Heizkasten angebracht, der oberhalb der Bewegungsbahn des Palettenstranges angeordnet ist. Die Anordnung des Heizkastens bezüglich der Bewegungsbahn des Palettenstranges kann mehrfach geändert werden. Zum einen kann der vertikale Abstand des Heizkastens bezüglich der Bewegungsbahn des Palettenstranges verändert werden. Dies erleichtert die Einstellung einer bestimmten Folientemperatur. Weiterhin kann der Heizkasten aus einer Anordnung oberhalb der Bewegungsbahn des Palettenstranges in eine seitlich dazu versetzte Stellung gebracht werden. In dieser Heizkasten-Ruhestellung können die Heizfelder auf die gewünschte Temperatur gebracht werden. Weiterhin kann in dieser Heizkasten-Ruhestellung ein Reflektor im Abstand zu den Heizfeldern angeordnet sein. Hierdurch wird der Energieverbrauch in der Heizkasten-Ruhestellung verringert.

Die in der Heizstation auf die vorgesehene Folientemperatur erwärmte Folie gelangt daraufhin in die Formstation. Dort erfolgt die Hochdruckverformung der anfänglich ebenen Folie, wobei die Folie auch weiterhin von der sie tragenden Palette gehalten wird. Wie bereits gesagt, weist die Formstation wenigstens auf:

- einen oberen im wesentlichen ortsfest angeordneten Formtisch;
- einen unteren, verschieblich gehaltenen Formtisch, der eine Schließstellung benachbart zum oberen Formtisch und eine Freigabestellung entfernt vom oberen Formtisch einnehmen kann;
- ein Formwerkzeug, dessen eine Werkzeughälfte am oberen Formtisch und dessen andere Werkzeughälfte am unteren Formtisch angebracht ist, wobei
  - in einer anfänglichen Freigabestellung eine Palette mit einer Folie zwischen die beiden im Abstand zueinander gehaltenen Werkzeughälften einschiebbar ist,
  - in der Schließstellung die zu verformende Folie zwischen den beiden Werkzeughälften eingespannt ist, die Werkzeughälften druckdicht geschlossen sind, und in eine Formmulde in der einen Werkzeughälfte ein fluides Druckmittel einführbar ist, das die Folie beaufschlagt und an ein Werkzeug und/oder an einen Formhohlraum in der anderen Werkzeughälfte anformt, und
  - in einer erneuten Freigabestellung die verformte Folie von dem Formwerkzeug gelöst und die Palette mit der verformten Folie weitertransportiert wird.

Vorzugsweise weist diese Formstation ein Säulengestell mit einer Anzahl vertikal ausgerichteter Säulen auf. Der obere Formtisch ist an diesen Säulen im wesentlichen ortsfest befestigt und kann zu Justierzwecken in geringem Umfang in vertikaler Richtung verstellbar sein. Der untere Formtisch ist längs dieser Säulen verschieblich geführt. Eine Verstellung des unteren Formtisches erfolgt mit Hilfe eines Antriebs, der einen Getriebebremsmotor, einen Kurbelantrieb, ein Pleuel mit vertikal verstellbarem Pleuellager und eine Doppel-Kniehebel-Anordnung aufweist. Diese Doppel-Kniehebel-Anordnung weist pro einfacher Kniehebel-Anordnung drei Arme auf, die an einer gemeinsamen Kniehebelwelle gelagert sind. Der Getriebebremsmotor ist exakt in der Schließstellung, das ist in der oberen Totstellung der Verstellung des unteren Formtisches und in der Freigabestellung, das ist in der unteren Totstellung der Verstellung des unteren Formtisches anhaltbar. Zweckmäßigerweise ist jeder Formtisch in der Draufsicht im wesentlichen quadratisch ausgebildet und weist erweiterte Eckenbereiche auf. Es sind vier Säulen vorgesehen, die durch Bohrungen geführt sind, die in den vier Eckenbereichen jedes Formtisches ausgespart sind. Die Verstellung des unteren Formtisches über eine Kniehebel-Anordnung und einen Kurbelantrieb gewährleistet einen sinusförmigen Antrieb, so daß der untere Formtisch allmählich den oberen Totpunkt (Schließstellung) sowie den unteren Totpunkt (Freigabestellung) seiner Verstellungsbewegung einnimmt. Es werden ganz erhebliche Formschließkräfte bei geringer Geräuschentwicklung erhalten.

Vorzugsweise erfolgt die vertikale Verstellung des oberen Formtisches mit Hilfe eines Kettengleichlaufs längs einer Gewindeverbindung. Hierzu sind die oberen Endabschnitte jeder Säule mit einem Außengewindeabschnitt versehen. Der obere Formtisch ist - in der Draufsicht - im wesentlichen quadratisch ausgebildet, und in jedem Eckenbereich ist eine Bohrung ausgespart, in welche drehbar eine Buchse eingesetzt ist, die mit einem passenden Innengewindeabschnitt versehen ist. Jede Buchse ist ferner mit einem Zahnkranz versehen. Über eine angetriebene Kette kann jede Buchse in gleichem Ausmaß gedreht, und damit der obere Formtisch angehoben oder abgesenkt werden.

Vorzugsweise ist am unteren Formtisch eine untere Werkzeughälfte angebracht, die aufweist:

- eine Bodenplatte mit Heizung und Temperaturkonstantregelung,
- ein Werkzeug, an dessen Kontur die Folie angeformt werden soll, und
- eine gefederte Mutterform, welche das Werkzeug in engem Abstand umschließt.

Die Bodenplatte ist am Formtisch befestigt, wobei zwischen Formtisch und Bodenplatte eine thermische Isolierung eingesetzt ist. Das Werkzeug ist an der Bodenplatte befestigt, beispielsweise festgeschraubt. Bei zusammengedrückten Federn fluchtet die Oberseite der Mutterform im wesentlichen mit der Kontur und/oder mit dem Boden eines Formhohlraums am Werkzeug. Wird das gesamte Formwerkzeug im Anschluß an die Hochdruckverformung wieder geöffnet, so heben die Federn die Mutterform an, und die Mutterform löst dabei die verformte Folie vom Werkzeug. Die gefederte Mutterform erleichtert die Entformung des verformten Ziehteils.

Vorzugsweise ist an der Oberseite der gefederten Mutterform eine nach außen offene, umlaufende Stufe ausgebildet, deren Abmessungen an die Aussparung innerhalb jeder Palette angepaßt ist. Der Palettenförderer transportiert die Palette mit der zu verformenden Folie in eine Position oberhalb der Mutterform. Mit der vertikal nach oben gerichteten Verstellung des unteren Formtisches wird auch die Mutterform vertikal nach oben verstellt, und der erhabene umlaufende Randabschnitt an der Oberseite der Mutterform schiebt sich in die Aussparung innerhalb der Palette hinein. Hierbei wird die Palette zentriert und die zu verformende Folie nimmt exakt die für die Hochdruckverformung vorgesehen Position bezüglich des Formwerkzeugs ein. Die Positionierung der zu verformenden Folie erfolgt auf einige wenige 1/10 Millimeter genau.

An dem oberen Formtisch ist die andere, passende Werkzeughälfte befestigt, in welcher eine Formmulde ausgespart ist, in welche das fluide Druckmittel einführbar ist. Diese andere Werkzeughälfte weist einen umlaufenden unteren Rand auf, der mit einem Dichtmittel, beispielsweise mit einem O-Ring versehen ist.

Bei einer Fortsetzung der vertikal nach oben gerichteten Verstellung des unteren Formtisches gelangt die von der Palette umgebene Mutterform zur Anlage am umlaufenden Rand der oberen Werkzeughälfte. Die, die Mutterform tragenden Federn werden allmählich zusammengedrückt, und das gesamte Formwerkzeug wird geschlossen, wobei das Dichtmittel eine druckdichte Abdichtung gewährleistet. Anschließend wird das fluide Druckmittel in die Formmulde eingeführt, beaufschlagt die Folie und formt diese an die Kontur des Werkzeugs an.

Bei dieser Hochdruckverformung wird das Folienmaterial unmittelbar und direkt mit dem fluiden Druckmittel beaufschlagt. Als fluides Druckmittel kommt insbesondere und vorzugsweise Druckluft in Betracht. Innerhalb von Sekundenbruchteilen nach Öffnung eines Einlaßventils für das Druckmittel ist die Folie an die Kontur des Werkzeugs angepaßt und der Umformungsvorgang beendet. Bei gewissen, mechanisch weniger belastbaren Folienmaterialien kann ein verzögerter Druckaufbau durch gedrosselte Druckmittelzufuhr ratsam sein. Auch bei größeren Mehrnutzen-Formwerkzeugen kann die vollständige Verformung der gesamten Folie etwas länger dauern. Auch in diesen Fällen ist die Verformung innerhalb einer Zeitspanne abgeschlossen, die weniger als 2 Sekunden beträgt.

Nach Abschluß der Verformung wird die Druckmittelzufuhr gestoppt, die Formmulde entlastet, und der untere Formtisch wieder abgesenkt. Die den Mutterrahmen tragenden Federn heben den Mutterrahmen an, und dabei wird die verformte Folie vom Werkzeug entfernt. Bei weiterer Absenkung des Formtisches kommt die Palette von der Mutterform frei. Der Palettenförderantrieb wird erneut in Gang gesetzt und die Palette mit der verformten Folie wird weitertransportiert und gelangt aus der Formstation heraus.

In der Entnahmestation wird die verformte Folie von der sie haltenden Palette gelöst und in einer Sammeleinrichtung aufgenommen. Im einfachsten Falle wird der Palettenstrang über Umlenkrollen geführt, und die Folie löst sich unter der Wirkung der Schwerkraft von der Palette und fällt in einen Sammelbehälter. Alternativ kann die Folie per Hand von der Palette gelöst und in einem Sammelbehälter abgelegt werden. Schließlich kann die Folie mit Hilfe von Druckluft und/oder mit Hilfe von Saugeinrichtungen von der Palette gelöst und in dem Sammelbehälter abgelegt werden.

Vorzugsweise ist eine Entnahmestation vorgesehen, die einen hin- und herführbaren Stempel und eine im Abstand dazu angeordnete Stapelrinne aufweist. Der Palettenstrang wird über eine Umlenkrolle geführt und wird weiterhin in im wesentlichen vertikaler Richtung durch einen Spalt zwischen Stempel und Stapelrinne geführt. Bei jeder Hinbewegung des Stempels wird eine Folie aus der Palette herausgedrückt und in die Stapelrinne hineingeschoben. Vorzugsweise ist die Stapelrinne leicht ansteigend gegenüber einer horizontalen Richtung angeordnet, um ein Umfallen der Folien zu verhindern.

Nachdem die Folie von der Palette getrennt worden ist, wird diese Palette längs eines Palettentransportpfades erneut in die Auflegestation geführt, um dort erneut eine zu verformende Folie auf der Palette abzulegen.

Zur Hochdruckverformung wird die Folie mit einem fluiden Druckmittel beaufschlagt, das einen Druckmitteldruck von wenigstens 20 bar aufweist. Vorzugsweise dient als fluides Druckmittel Druckluft. Je nach Folienmaterial, Folienstärke und/oder Werkzeugform und Größe der Formfläche wird Druckluft mit einem Druck zwischen etwa 60 und 300 bar eingesetzt. Der erfindungsgemäßen Vorrichtung ist ein Drucklufterzeuger zugeordnet, der mit einem mehrstufigen Kompressor ausgerüstet ist, um Druckluft mit einem Druck von etwa 330 bar zu erzeugen. Die Druckluft wird durch einen Kondensationstrockner geführt, um Wasser abzutrennen. Die getrocknete Druckluft wird in einer Vorratsflasche gesammelt. Aus der Vorratsflasche gelangt die Druckluft über eine Leitung in das Formwerkzeug. In diese Druckluftleitung sind ein oder mehrere Druckminderer eingesetzt. Die Kompressoren werden immer dann selbsttätig in Betrieb genommen, wenn der Druck in der Vorratsflasche um einen bestimmten Betrag abgenommen hat.

Der Antriebsmotor und die verschiedenen Umlenkrollen für den Palettenstrang sowie die Komponenten der oben erläuterten Stationen sind an einem Gestell angebracht, das über Schwingmetallfüße auf einem Fundament ruht. Die Schwingmetallfüße sind mit schwingungsdämpfenden Gummielementen versehen und weisen Verstellspindeln zum genauen Einstellen der Parallelität der Aggregate auf. Die Schwingmetallfüße dämpfen einen großen Teil der stoßartigen Schwingungen, die beim Betrieb der Formstation auftreten. Das Gestell ist in üblicher Weise verkleidet, und der Zugang erfolgt über Türen, die mit Endschaltern gesichert sind.

Die erfindungsgemäße Vorrichtung kann zusätzlich mit einer Stanzstation ausgerüstet sein, die zwischen der Formstation und der Entnahmestation angeordnet ist. Sofern eine Stanzstation vorgesehen ist, wird der Palettenstrang entsprechend verlängert und eine zusätzliche Anzahl Paletten vorgesehen. Die Stanzstation kann getrennte Aggregate aufweisen, welche einerseits als Lochstanze und andererseits als Durchfall-Schnittstanze ausgebildet sind. Vorzugsweise ist ein kombiniertes Stanzaggregat vorgesehen, das sowohl mit einem Lochstanzwerkzeug wie mit einem Durchfall-Schnittstanzwerkzeug ausgerüstet ist.

Vorzugsweise kann ein solches kombiniertes Stanzaggregat pro Arbeitstakt zwei Paletten mit je einer verformten Folie aufnehmen und weist einen an einem Säulengestell geführten, elektromotorisch über eine Doppel-Kniehebel-Anordnung angetriebenen Untertisch auf. Diesem ist ein oberer Stanztisch zugeordnet, der mit Hilfe eines Kettengleichlaufs in geringem Umfang vertikal verstellbar ist, wie das für den oberen Formtisch der Formstation beschrieben ist. Die Schnittwerkzeuge sind vorzugsweise in Einschubtechnik ausgeführt, um einen schnellen Werkzeugwechsel zu ermöglichen. Die Schnittwerkzeuge sind am Untertisch befestigt. Passende Widerlager oder Gegenstücke sind am Obertisch befestigt. Zur Befestigung dieser Werkzeugkomponenten dienen vorzugsweise Klemmleisten. In der Arretierstellung sind diese Klemmleisten über Tellerfedern vorgespannt. Ferner sind eine Anzahl pneumatisch betätigte Kolben/Zylinder-Anordnungen vorgesehen, welche über je einen Stempel die Klemmleiste anheben und in eine Werkzeugwechsel-Stellung bringen. Auch bei Druckausfall kann kein unbeabsichtigtes Lösen der Klemmleisten und eine dadurch bedingte Verstellung der Werkzeuge auftreten. Die Zentrierung der Palette, welche die bereits verformt und zu stanzende Folie hält, an einer Bodenplatte des Stanzwerkzeuges erfolgt in gleicher Weise, wie das oben für die Zentrierung der Palette an der Mutterform des Formwerkzeuges beschrieben ist.

Im Falle einer Durchfall-Schnittstanze ist der Untertisch zusätzlich mit einem pneumatischen Auswerfer versehen, welcher pro Stanztakt das ausgestanzte Ziehteil durch die Matritze hindurch in einen Stapelkäfig befördert, der in den Obertisch eingesetzt ist. Die Abnahme der gestanzten Formteile erfolgt schließlich von Hand. Das zurückbleibende Stanzgitter verbleibt an der Palette und wird schließlich in der Entnahmestation entfernt. Für dieses kombinierte Stanzaggregat ist vorzugsweise ein Antrieb über Getriebemotor, Kurbelantrieb und Doppel-Kniehebel-Anordnung vorgesehen, der eine Stanzkraft von 0,3 Mega-Newton und mehr, beispielsweise von 0,4 Mega-Newton liefert.

Nachstehend werden bevorzugte Ausführungsformen der erfindungsgemäßen Vorrichtung mit Bezugnahme auf die Zeichnungen erläutert; die letzteren zeigen:

Figur 1      eine schematische Seitenansicht einer ersten Ausführungsform einer erfindungsgemäßen Vorrichtung;

Figur 2      eine schematische Seitenansicht einer zweiten Ausführungsform einer erfindungsgemäßen Vorrichtung, die eine automatisierte Auflegestation und eine automatisierte Entnahmestation aufweist;

Figur 3      eine schematische Seitenansicht einer dritten Ausführungsform einer erfindungsgemäßen Vorrichtung, die zusätzlich ein kombiniertes Stanzaggregat aufweist;

Figur 4a      eine schematische Längsschnittdarstellung und

Figur 4b      eine perspektivische Darstellung einer Auflegestation einer erfindungsgemäßen Vorrichtung;

Figur 5      eine schematische Seitenansicht der Heizstation einer erfindungsgemäßen Vorrichtung;

Figur 6a    eine schematische Längsschnittdarstellung,

Figur 6b    eine schematische Querschnittsdarstellung und

Figur 6c    eine aussschnittsweise perspektivische Darstellung der Doppel-
Kniehebel-Anordnung einer Formstation der erfindungsgemäßen Vorrichtung;

Figur 7a    in geöffnetem Zustand und

Figur 7b    in geschlossenem Zustand ein
Formwerkzeug der Formstation
nach Fig. 6a;

Figur 8a    eine schematische Seitenansicht einer Stanzstation einer erfindungsgemäßen Vorrichtung und

Figur 8b    ein Detail aus Fig. 8a, nämlich die
Befestigung der Klemmleisten in
der Arretierstellung oder in der
Werkzeugwechsel-Stellung;

Figur 9    eine schematische Seitenansicht
der Befestigung einer Palette an einer Transportkette; und

Figur 10    in perspektivischer Darstellung eine
rückwärtige Ansicht einer erfindungsgemäßen Vorrichtung, wobei
insbesondere die Palettenfördererinrichtung und die Drucklufterzeugungseinrichtung zu erkennen sind.

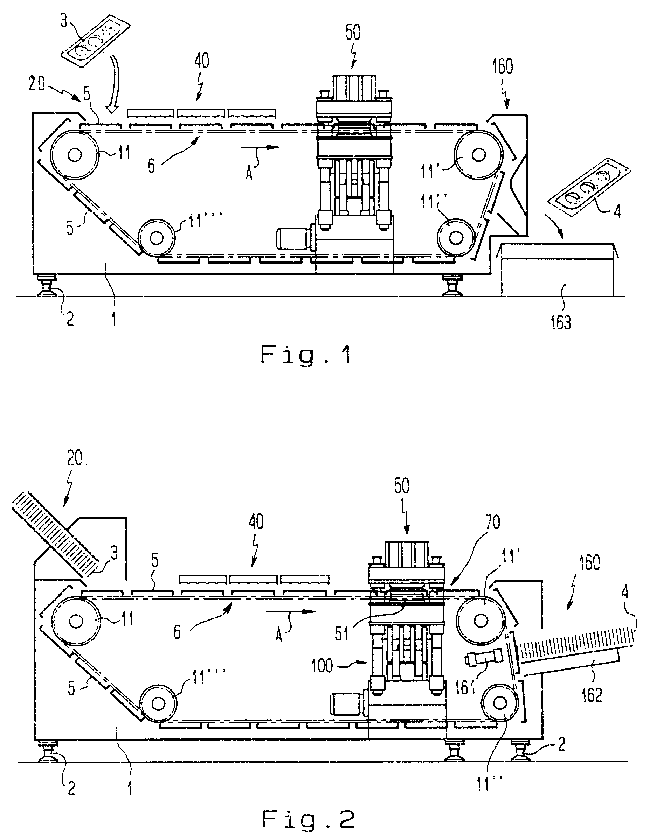

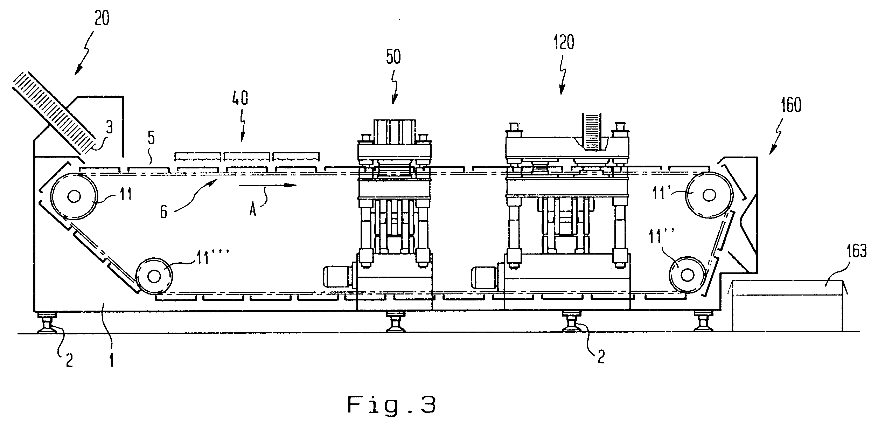

Wie in den Figuren 1, 2 und 3 schematisch
dargestellt, weist die erfindungsgemäße Vorrichtung ein Maschinengestell 1 auf, das auf Schwingfüßen 2 ruht, die auf einem Fundament abgestützt
sind. Am Maschinengestell 1 sind je eine Auflegestation 20, eine Heizstation 40, eine Formstation 50
und eine Entnahmestation 160 angeordnet. Zusätzlich kann eine wahlweise vorgesehene Stanzstation
120 vorgesehen sein, wie das in Figur 3 dargestellt
ist. Bei der Ausführungsform nach Figur 1 erfolgt
das Auflegen der zu verformenden Folien 3 per
Hand und die Entnahme der verformten Folien 4
selbsttätig unter der Wirkung der Schwerkraft.

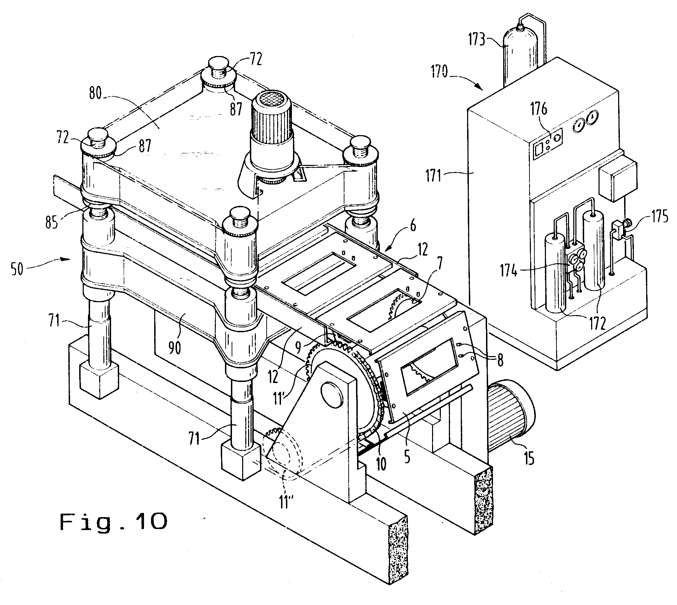

Eine Vielzahl von Paletten 5 ist in einem geschlossenen, praktisch endlosen Palettenstrang 6
angeordnet. Jede Palette 5 dient zum Transport je
einer zu verformenden Folie 3 oder einer verformten Folie 4 durch ausgewählte Arbeitsstationen der
Vorrichtung. Jede Palette 5 besteht aus einer rechteckigen, rahmenartigen Blechtafel, an der wenigstens eine Aussparung 7 ausgebildet ist, die von
der zu verformenden Folie 3 überdeckt ist. Von der
Palette 5 stehen zwei Zentrierstifte 8 ab, welche in
passend angeordnete Aussparungen der zu verformenden Folie 3 eingreifen, um eine paßgenaue
Anordnung der Folie 3 bezüglich der Palette 5 zu
gewährleisten. Im Bereich der beiden Schmalseiten-Randabschnitte wird jede Palette 5
von einem Palettenhalter 9 gehalten, der seinerseits an Kettengliedern einer umlaufenden Kette 10
angelenkt ist. Es sind zwei parallel und im Abstand
zueinander geführte Ketten 10 vorgesehen, die
über Umlenkrollen 11, 11', 11'' und 11''' geführt
sind. Typischerweise werden die Umlenkrollen 11'
angetrieben, wozu ein Elektromotor 15 und ein
Stirnradgetriebe vorgesehen sind (vgl. Figur 10).
Der Vorschub der Paletten 5 erfolgt schrittweise in
Richtung des Pfeiles "A" und ist insbesondere an
den Arbeitstakt der Formstation 50 angepaßt.

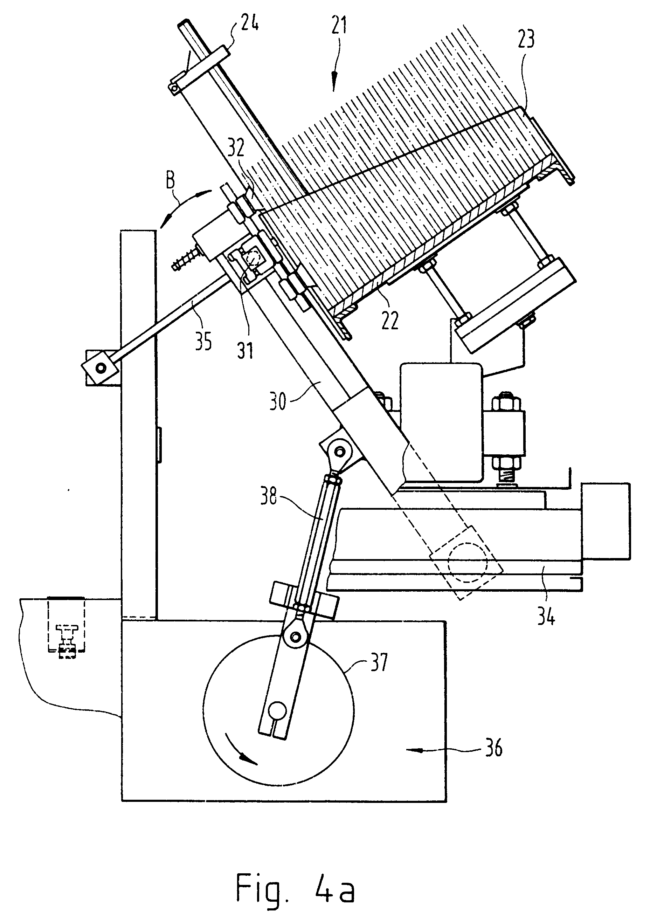

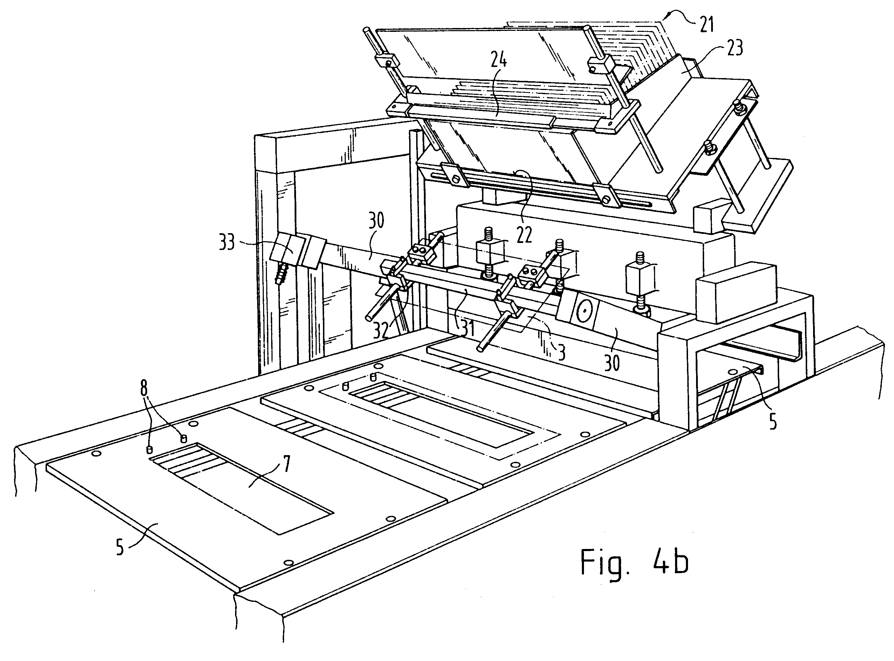

In der Auflegestation 20 wird je eine zu verformende Folie 3 paßgenau auf je einer Palette 5
angeordnet. Typischerweise ist die zu verformende
Folie 3 mit einem gegebenenfalls mehrfarbigen
Aufdruck oder einer sonstigen Beschichtung versehen, der/die an den Verwendungszweck des herzustellenden Ziehteiles angepaßt ist. Im einfachsten
Falle kann das Auflegen der Folien 3 per Hand
erfolgen, wie in Figur 1 angedeutet. Vorzugsweise
wird jedoch eine automatisierte Auflegestation 20
vorgesehen, die schematisch in den Figuren 4a
und 4b dargestellt ist.

Zu den wesentlichen Bestandteilen der Auflagestation 20 gehören ein einstellbares Magazin 21,
das eine Vielzahl von Folien 3 in paralleler Anordnung enthält, zwei parallel in Abstand angeordnete
und synchron geführte Auflegearme 30, die drehbar ein Saugerrohr 31 halten, an dem verstellbar
eine Anzahl Sauger 32 angebracht sind, sowie den
Antrieb 36 für wenigstens einen Auflegearm 30.
Das Saugerrohr 31 wird abschnittweise hin- und
hergedreht, so daß die Sauger 32 eine Schwenkbewegung entsprechend Pfeil "B" (vgl. Figur 4a) ausführen.

Das Magazin 21 weist einen höhenverstellbaren Magazinboden 22 und seitenverstellbare Magazinseitenwände 23 auf. Der Magazinboden 22 ist
ansteigend ausgerichtet, vorzugsweise unter einem
30°-Winkel ansteigend bezüglich der Horizontalen.
Mit Hilfe einer höhenverstellbaren Rückhaltestange
24 an der Magazinoberseite und der seitenverstellbaren Magazinseitenwände 23 kann das Magazin
21 auf das gerade aktuelle Folienformat eingerichtet werden. Das Saugerrohr 31 ist über eine steuerbare Ventileinrichtung 33 an eine - nicht dargestellte - Unterdruckquelle angeschlossen. Die Stellung
der Sauger 32 ist leicht an das aktuelle Folienformat anpaßbar. Die Ventileinrichtung 33 beaufschlagt die Sauger 32 mit Unterdruck oder belüftet
diese entsprechend den Arbeitsschritten eines Auflegezyklus. Die Sauger 32 packen die jeweils im
Magazin 21 endständige Folie 3, transportieren
diese zu der in der Auflegestation 20 befindlichen
Palette 5 und legen diese darauf ab. Wie insbesondere aus der Schnittdarstellung nach Figur 4a ersichtlich ist, ist ein Ende des Auflegearmes 30 in einem Führungsspalt 34 geführt, und das andere Ende wird von einem Schwinghebel 35 gehalten. Der Schwenkantrieb 36 weist einen Kurbelantrieb 37 und ein Pleuel 38 auf. Der Kurbelantrieb 37 wird von einem - nicht dargestellten - Motor angetrieben, und führt pro Arbeitstakt eine Umdrehung aus. Zusätzlich sind Endschalter, Einstellschrauben und Sensoren zur Betriebsüberwachung vorgesehen.

Es ist wünschenswert, die Hochdruckverformung an einer Folie 3 durchzuführen, welche eine definierte Folientemperatur aufweist. Hierzu wird die Folie 3 auf eine definierte Temperatur erwärmt, die typischerweise im Bereich zwischen 30 und 40°C liegt, im Einzelfall aber auch 60°C und mehr betragen kann. Die Erwärmung der auf einer Palette 5 abgelegten Folie 3 erfolgt in der Heizstation 40.

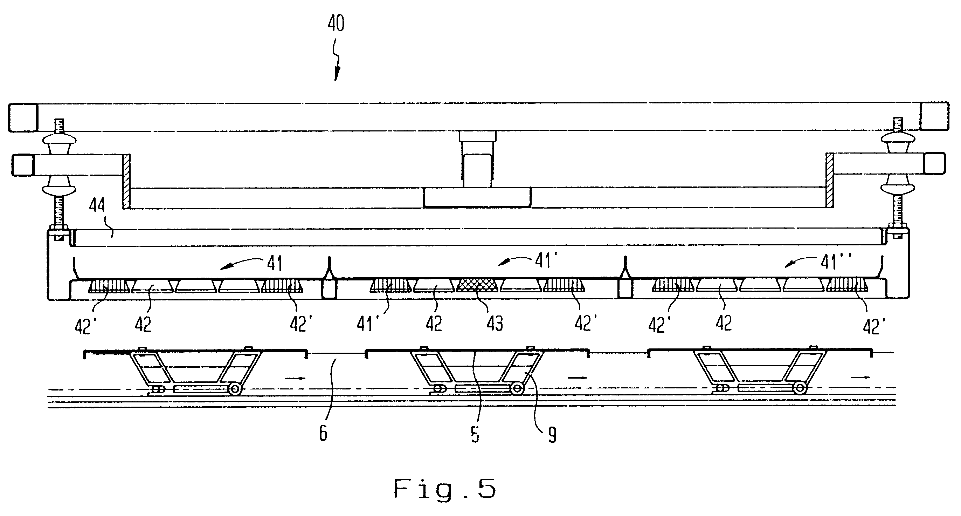

Die Figur 5 zeigt schematisch den Aufbau einer Heizstation 40. Typischerweise weist die Heizstation 40 drei Heizfelder 41, 41' und 41'' auf, die im Abstand oberhalb der Bewegungsbahn des Palettenstranges 6 angeordnet sind. Jedes Heizfeld 41, 41', 41'' weist eine Anzahl Infrarot-Flächenstrahler 42 auf, von denen einige unabhängig ansteuerbar sind. Vorzugsweise sind die randständigen Infrarot-Flächenstrahler 42' unabhängig ansteuerbar. Ein Pilotstrahler 43 ist mit Sensoren zur Erfassung der Umgebungstemperatur und der Oberflächentemperatur ausgestattet. Die Oberflächentemperatur des Pilotstrahlers 43 kann in engen Grenzen konstant gehalten werden. Der Pilotstrahler 43 liefert Signale zur Steuerung der unabhängig ansteuerbaren IR-Flächenstrahler 42'. Die Heizfelder 41, 41' und 41'' sind vorzugsweise an einem Heizkasten 44 angebracht, der bezüglich der Bewegungsbahn des Palettenstranges 6 höhenverstellbar ausgebildet ist und seitlich neben diese Bewegungsbahn verfahren werden kann. In dieser seitlichen Ruhestellung ist zusätzlich ein - nicht dargestellter - Reflektor vorgesehen, der im Abstand zu den IR-Flächenstrahlern 42, 42' angeordnet ist.

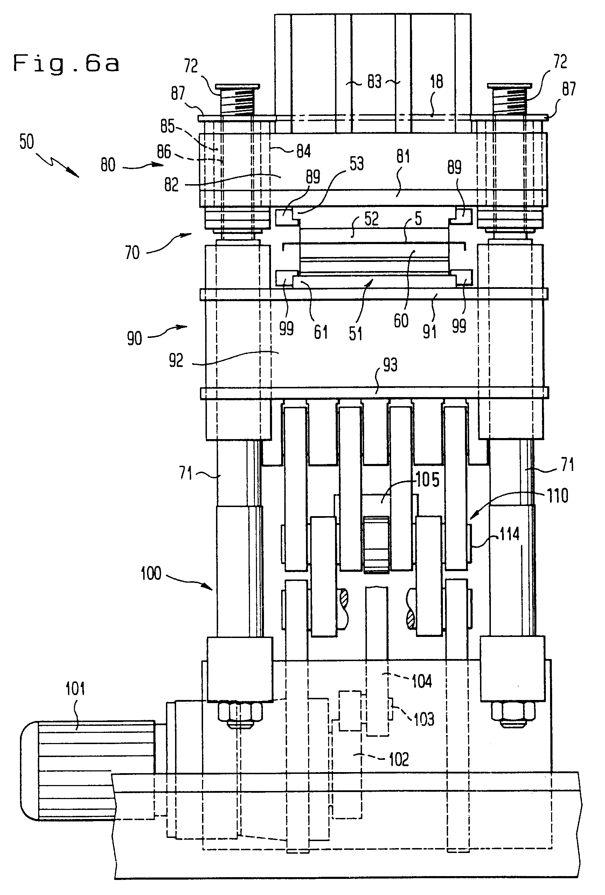

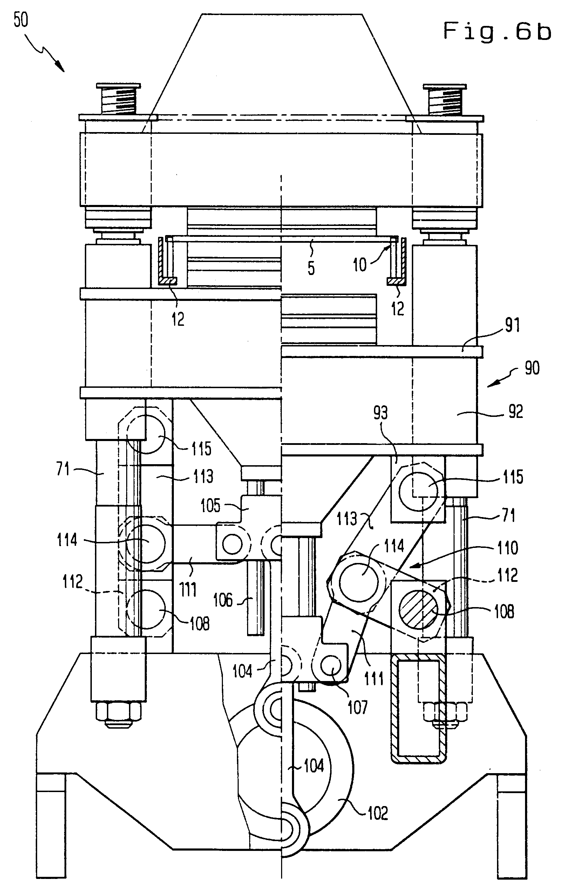

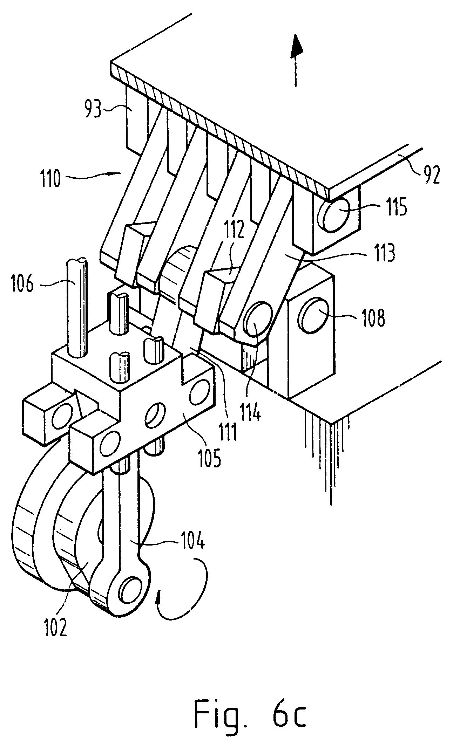

Die auf die vorgesehene Folientemperatur erwärmte Folie 3 gelangt in die Formstation 50 und wird dort mit einem fluiden Druckmittel beaufschlagt, um die isostatische Hochdruckverformung durchzuführen. Eine bevorzugte Formstation 50 ist mit den Figuren 6a, 6b und 6c dargestellt. Zu den wesentlichen Komponenten der Formstation 50 gehören eine Presse 70, ein Antrieb 100 für die Presse 70 und ein Formwerkzeug 51, an welchem die Verformung durchgeführt wird. Die Presse 70 weist einen oberen Formtisch 80, einen unteren Formtisch 90 und ein Säulengestell mit vier vertikal ausgerichteten Säulen 71 auf, an welchen die Formtische 80, 90 geführt sind. Jede Säule 71 ist am oberen Endabschnitt mit einem Außengewindeabschnitt 72 versehen. Jeder Formtisch 80, 90 ist in der Draufsicht im wesentlichen quadratisch ausgebildet (vgl. Figur 10) und weist erweiterte Eckenbereiche auf, in welchen je eine durchgehende Bohrung 84, 94 ausgespart ist, durch welche je eine Säule 71 geführt ist. Jeder Formtisch 80, 90 weist je eine Tischplatte 81 und 91 auf, die an je einem Traggestell 82, 92 abgestützt ist, das seinerseits mehrere Tragholme 83, 93 aufweist. Wie insgesamt aus den Figuren 6a und 6b ersichtlich, ist für die Presse 70 eine schwere, massive Konstruktion vorgesehen, die erhebliche Kräfte aufnehmen und/oder ausüben kann. Eine beispielhafte Presse ist - bei einer Formfläche von ca. 240 cm$^2$ - für einen maximalen Formdruck von etwa 300 bar ausgelegt und erzeugt mit dem noch zu erläuternden Antrieb eine Formschließkraft von wenigstens 300 Mega-Newton.

Der obere Formtisch 80 ist im wesentlichen ortsfest angeordnet, kann jedoch zu Justierzwecken in geringem Umfang in vertikaler Richtung verstellt werden. Hierzu ist ein Kettengleichlauf vorgesehen. In die durchgehenden Bohrungen 84 am oberen Formtisch 80 ist je eine drehbar gehaltene Buchse 85 eingesetzt, die an ihrem Innenumfang mit einem Innengewindeabschnitt 86 versehen ist. Zusätzlich ist an jeder Buchse 85 ein Zahnkranz 87 befestigt. Eine motorisch angetriebene Kette 18 greift nacheinander in jeden Zahnkranz 87 ein und verursacht eine Drehung jeder Buchse 85 um den gleichen Betrag, was eine vertikale Verstellung des oberen Formtisches 80 längs der Gewindeabschnitte 72/86 bewirkt.

Der untere Formtisch 90 ist vertikal verstellbar längs der Säulen 71 geführt. Der Aufbau des Antriebs 100 zur Verstellung des unteren Formtisches 90 ist insbesondere aus den Figuren 6b und 6c ersichtlich; hier zeigt die linke Teildarstellung von Figur 6b die obere Totstellung der Formtischverstellung (Schließstellung) und die rechte Teildarstellung der Figur 6 b zeigt die untere Totstellung der Formtischverstellung (Freigabestellung).

Zu diesem Antrieb 100 gehören ein elektrisch betätigter Stirnrad-Getriebebremsmotor 101, der einen Kurbelantrieb 102 treibt. Die Kurbel 103 wirkt über ein Pleuel 104 auf ein verschiebliches Pleuellager 105, das an Führungsstäben 106 in vertikaler Richtung verschieblich geführt ist. Eine Doppel-Kniehebel-Anordnung 110 weist drei gelenkig miteinander verbundene Arme 111, 112 und 113 auf, die sämtlich an der gemeinsamen Kniehebelwelle 114 gelagert sind. Der erste Arm 111 erstreckt sich zwischen der Kniehebelwelle 114 und einer Welle 107 am Pleuellager 105. Der zweite Arm 112 erstreckt sich zwischen der Kniehebelwelle 114 und einer Stützwelle 108, die am Pressengestell abgestützt ist. Der dritte Arm 113 erstreckt sich zwischen der Kniehebelwelle 114 und einer Welle 115, die an den Tragholmen 93 des Hubgestells 92 des unteren Formtisches 90 abgestützt ist.

Wie aus der linken Teildarstellung nach Figur 6 b ersichtlich, erstrecken sich - in der oberen Totstellung der Kurbelbewegung - der erste Arm 111 im wesentlichen horizontal und der zweite und dritte Arm 112 und 113 in vertikaler Richtung parallel zu den Säulen 71 des Säulengestells. Der Stirnrad-Getriebebremsmotor kann exakt in dieser Stellung angehalten werden, welcher der Schließstellung des unteren Formtisches 90 entspricht. In dieser Stellung kann der Antrieb 100 einen besonders hohen Formdruck ausüben und/oder aufnehmen. Durch die sinusförmige Verstellung über Kurbelantrieb 102 und Doppel-Kniehebel-Anordnung 110 arbeitet der Antrieb 100 sehr leise und der untere Formtisch 90 nimmt allmählich seine obere oder untere Endstellung bzw. Totstellung ein. Die stärksten Kräfte wirken stets in vertikaler Richtung, parallel zu den Säulen 71,und eine Beschädigng der Säulen 71 und der Führungen 94 am unteren Formtisch wird sicher vermieden. Die gewünschte hohe Formschließkraft von 300 Mega-Newton und mehr kann mit einem Antrieb 100 erzielt werden, der vergleichsweise geringe Abmessungen aufweist.

Durch entsprechende Ansteuerung des Motors 101 wird der untere Formtisch 90 so lange angehoben, bis er einen oberen Totpunkt erreicht hat und seine Schließstellung einnimmt, bzw. so weit abgesenkt, bis der untere Formtisch 90 seinen unteren Totpunkt erreicht hat und eine Freigabestellung einnimmt. Exakt in diesen jeweiligen Endstellungen kann der Getriebebremsmotor 101 angehalten werden.

Durch den Arbeitsraum, der einerseits durch die vorderen und hinteren Säulen 71, sowie andererseits durch den unteren und oberen Formtisch 80, 90 begrenzt ist, ist je ein Kettenschutzgestell 12 geführt, das jede Kette 10 abschirmt, welche die Vielzahl Paletten 5 halten und transportieren.

An der Tischplatte 91 des unteren Formtisches 90 und an der Tischplatte 81 des oberen Formtisches 80 sind paarweise Winkelprofile 99, 89 angeordnet, die je eine Führungsnut begrenzen, in welche je ein Tragelement 53, 61 der oberen und unteren Werkzeughälfte 52, 60 einschiebbar ist. Je eine - nicht dargestellte Arretiervorrichtung sichert die eingeschobene Werkzeughälfte 52, 60 in der vorgesehenen Anordnung. Die resultierende Einschubtechnik erlaubt einen schnellen Wechsel der Werkzeughälften 52, 60.

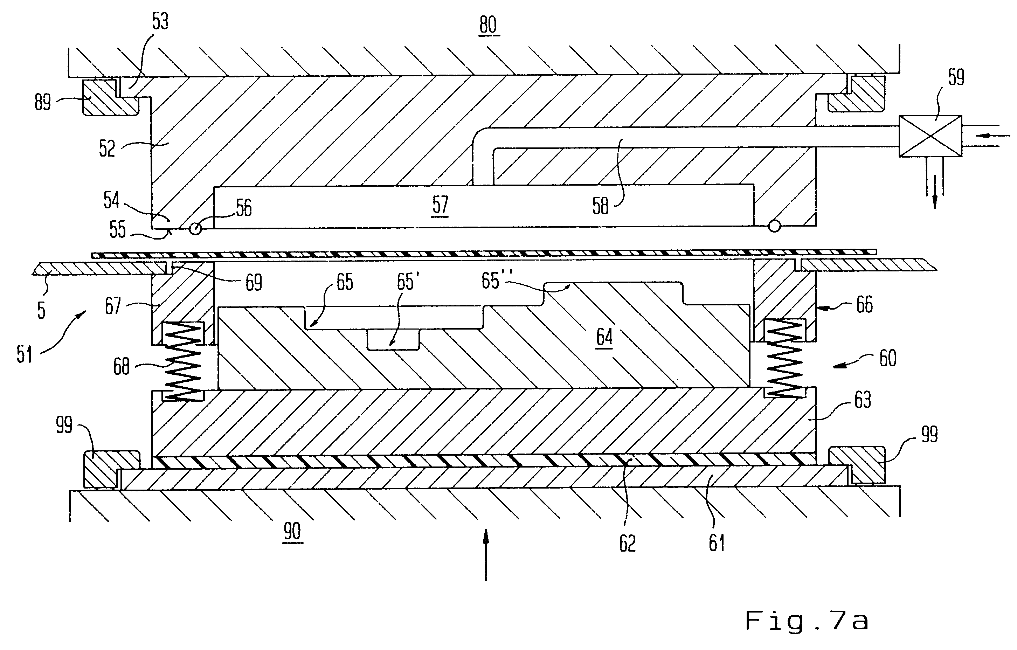

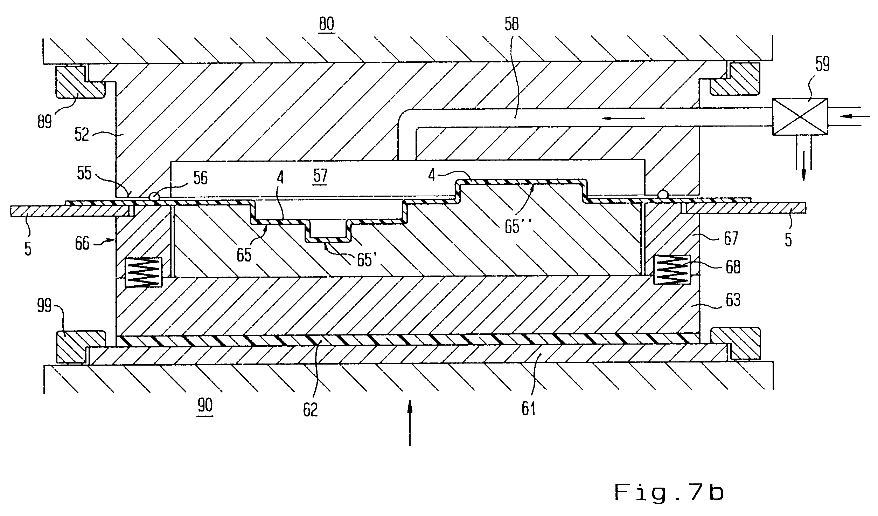

Die Figur 7a zeigt ein Formwerkzeug 51 in geöffnetem Zustand; die Figur 7b zeigt das Formwerkzeug 51 in geschlossenem Zustand nach Durchführung einer isostatischen Hochdruckverformung. Wie im einzelnen aus den Figuren 7a und 7b ersichtlich, besteht das Formwerkzeug 51 im wesentlichen aus einem Oberteil 52, und einer unteren Werkzeughälfte 60. Das Oberteil 52 weist einen abstehenden Halteflansch 53 und einen umlaufenden Steg 54 auf, in dessen untere Stirnfläche 55 ein Dichtmittel, beispielsweise ein O-Ring 56 eingesetzt ist. Das Oberteil 52 begrenzt eine Formmulde 57, in welche ein Kanal 58 mündet, über den ein fluides Druckmittel zugeführt und wieder entfernt werden kann. Lediglich schematisch angedeutete Steuerorgane 59 regeln die Druckmittelversorgung.

Die untere Werkzeughälfte 60 besteht im wesentlichen aus einer Tragplatte 61, einer Bodenplatte 63, aus dem eigentlichen Werkzeug 64 mit den schematisch und beispielhaft angedeuteten Konturen 65, 65', 65'', sowie aus einer gefederten Mutterform 66, welche das Werkzeug 64 umschließt. Die Bodenplatte ist vorzugsweise mit einer Heizeinrichtung, beispielsweise mit Heizdrähten und mit einer Regelungseinrichtung zur Temperaturkonstanthaltung ausgerüstet. Damit kann die Temperatur der unteren Werkzeughälfte 60 an die Folientemperatur angepaßt werden. Zwischen der Tragplatte 61 und der Bodenplatte 63 ist eine Lage aus wärme-isolierendem Material 62 angeordnet. Die Tragplatte 61 wird mit Hilfe der Winkelprofile 99 am unteren Formtisch 90 gehalten.

Die Mutterform 66 weist einen Rahmen 67 auf, der federnd auf Federn 68 abgestützt ist. An der oberen Stirnfläche des Rahmens 67 ist eine umlaufende, nach außen offene Stufe 69 ausgespart. Diese Stufe 69 kann in die Aussparung 7 einer Palette 5 eingreifen, die sich zwischen dem Oberteil 52 und der unteren Werkzeughälfte 60 befindet, und zentriert dabei die Palette 5 gegenüber dem Formwerkzeug 51. Es wird eine paßgenaue Anordnung der zu verformenden Folie 3 bezüglich des Werkzeuges 64 erhalten.

Im oberen Totpunkt seiner Verstellbewegung nimmt der untere Formtisch 90 eine Schließstellung ein. Zum Erreichen dieser Schließstellung kann die innerhalb der Presse 70 befindliche Palette 5 geringfügig angehoben werden, beispielsweise um ca. 3 bis 4 mm, um bei Bedarf auch eine Positiv-Verformung der Folie 3 durchzuführen. In dieser Schließstellung ist das Formwerzeug 51 geschlossen, wie das mit Figur 7b dargestellt ist. Die, die Mutterform 66 haltenden Federn 68 sind zusammengedrückt, und die untere Stirnfläche des Rahmens 67 der Mutterform 66 liegt an der Bodenplatte 63 an. Die von der Palette 5 gehaltene Folie 3 befindet sich anfänglich in geringem Abstand oberhalb des Werkzeugs 64. Die untere Stirnfläche 55 des Oberteils 52 liegt an der oberen Stirnfläche der Mutterform 66 an, und das Dichtmittel 56 sorgt für eine druckdichte Abdichtung. Ein fluides Druckmittel wird über den Kanal 58 in die Formmulde 57 eingeführt und formt die Folie 3 schlagartig an die Konturen 65, 65', 65'' des Werkzeugs 64 an. Daraufhin wird mit Hilfe der Steuerorgane 59 die Formmulde 57 wieder entlastet, und der untere Formtisch 90 wird abgesenkt. Die Federn 68 heben die Mutterform 66 an,und die verformte Folie 4 wird vom Werkzeug 64 gelöst bzw. entformt.

Die verformte Folie 4 wird von der sie tragenden Palette 5 weiterbefördert und gelangt schließlich in die Entnahmestation 160. Wie aus Figur 1 ersichtlich, kann sich im einfachsten Falle die verformte Folie 4 von der Palette 5 unter der Wirkung der Schwerkraft lösen und fällt durch einen Schacht in einen Sammelbehälter 163. Das Lösen der verformten Folie 4 kann durch Anwendung von Druckluft und/oder Unterdruck gefördert werden. Alternativ kann eine Entnahme von Hand vorgesehen werden.

Vorzugsweise ist eine automatisierte Entnahmestation 160 vorgesehen, wie sie schematisch in Figur 2 angedeutet ist. Wie dargestellt, weist die Entnahmestation 160 einen mechanisch oder pneumatisch angetriebenen, hin- und herverschieblichen Stempel 161 sowie eine dazu im Abstand angeordnete Stapelrinne 162 auf. Die Stapelrinne 162 ist gegenüber der Horizontalen leicht ansteigend ausgerichtet. Der Palettenstrang 6 wird zwischen den Umlenkrollen 11' und 11'' auf einer im wesentlichen vertikal ausgerichteten Bahn durch einen Spalt zwischen Stempel 161 und Stapelrinne 162 geführt. Bei jeder Hinbewegung drückt der Stempel 161 auf die verformte Folie 4, löst diese aus den Zentrierstiften 8, entfernt die Folie 4 von der Palet-te 5 und schiebt die verformte Folie 4 in die Stapelrinne 162 hinein. Eine Anzahl verformter Folien 4 wird schließlich aus der Stapelrinne 162 entnommen.

Zwischen der Formstation 50 und der Entnahmestation 160 kann wahlweise zusätzlich eine Stanzstation 120 angeordnet sein, wie das aus Figur 3 ersichtlich ist. In einem solchen Falle ist die Anzahl der Paletten 5 zu erhöhen und sind die Ketten 10 zu verlängern, welche diese Paletten 5 halten und transportieren. Die Stanzstation 120 kann eine Lochstanze aufweisen, um Löcher in die verformte Folie 4 zu stanzen. Alternativ kann die Stanzstation 120 eine Durchfall-Schnittstanze aufweisen, um einen Konturenschnitt durchzuführen.

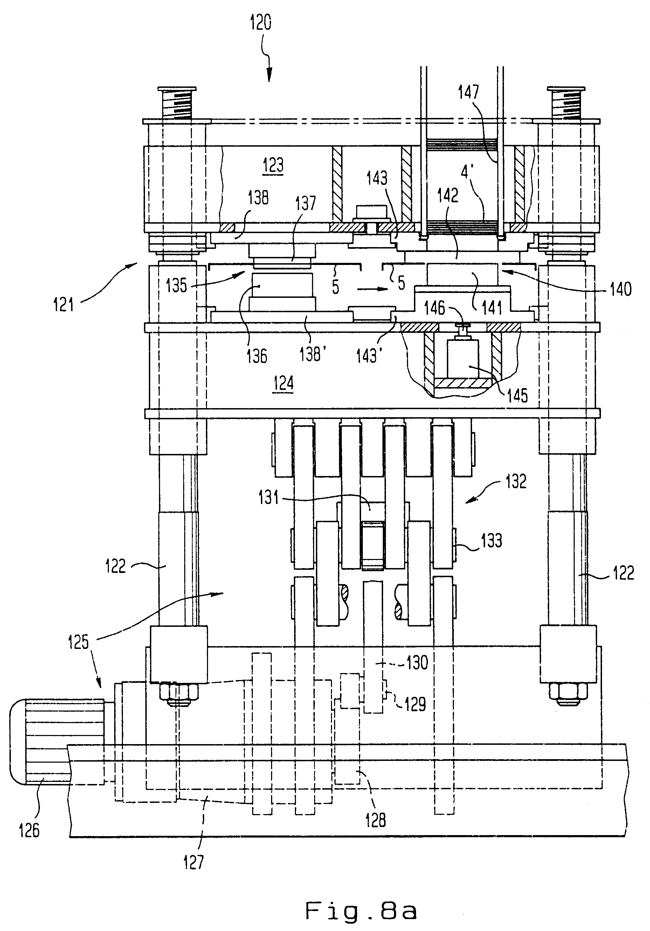

Vorzugsweise ist die Stanzstation 120 als kombiniertes Stanzaggregat 121 ausgebildet, das eine Lochstanze 135 und eine Durchfall-Schnittstanze 140 aufweist. Eine beispielhafte Ausführungsform eines solchen kombinierten Stanzaggregates 121 ist in Figur 8a dargestellt.

Wie aus Figur 8a ersichtlich, weist das kombinierte Stanzaggregat 121 ein Säulengestell mit vier vertikalen Säulen 122 auf, an denen ein Obertisch 123 und ein Untertisch 124 geführt sind. Der Ab-stand zwischen den - in Palettenbewegungsrich-tung - ersten und zweiten Säulen, sowie die Abmessungen der Tische 123, 124 sind ausreichend gewählt, um zwei Paletten 5 aufzunehmen. Der Obertisch 123 ist zu Justierzwecken in geringem Ausmaß vertikal verstellbar; hierzu ist ein motorisch angetriebener Kettengleichlauf vorgesehen, wie er vorstehend mit Bezugnahme auf den oberen Formtisch 80 der Presse 70 der Formstation 50 beschrieben worden ist. Der Untertisch 124 ist längs der Säulen 122 vertikal verstellbar. Ausgehend von einer Freigabestellung enfernt zum Obertisch 123 durchfährt der Untertisch 124 eine Stanzstellung benachbart zum Obertisch 123, um dann erneut die Freigabestellung einzunehmen.

Zur Verstellung des Untertisches 124 dient ein Antrieb 125 mit einem Getriebemotor 126, der über ein Schneckengetriebe 127 mit Hohlwelle und Schrumpfscheibenübertragung kraftschlüssig einen Kurbelantrieb 128 treibt. Dessen Kurbel 129 ist über ein Pleuel 130 mit einem vertikal verstellbar geführten Pleuellager 131 verbunden. Weiterhin ist eine Doppel-Kniehebel-Anordnung 132 mit einer Kniehebelwelle 133 vorgesehen, an der eine Anzahl Arme gelagert ist, wie das im einzelnen für die Doppel-Kniehebel-Anordnung 110 des Antriebs 100 der Presse 70 beschrieben ist. Bedingt durch die Doppel-Kniehebel-Anordnung 132 kann das Stanzaggregat 121 auch einseitig mit lediglich einem Werkzeug 135 oder 140 betrieben werden. Mit einer Antriebsleistung von 3 kW für den Getriebemotor 126 kann eine Stanzkraft von 0,4 Mega--Newton erzielt werden.

Am Untertisch 124 sind das Schneid- oder Stanzwerkzeuq 136 für die Lochstanze 135 und das Schneid- oder Stanzwerkzeug 141 für die Durchfall-Schnittstanze 140 befestigt. Am Obertisch 123 sind passende Widerlager oder Gegenstücke 137 bzw. 142 befestigt. Sämtliche Werkzeugteile 136, 137 bzw. 141, 142 sind an Halteplatten 138, 138' bzw. 143, 143' befestigt, die in Einschubtechnik am Untertisch 124 oder Obertisch 123 festlegbar sind.

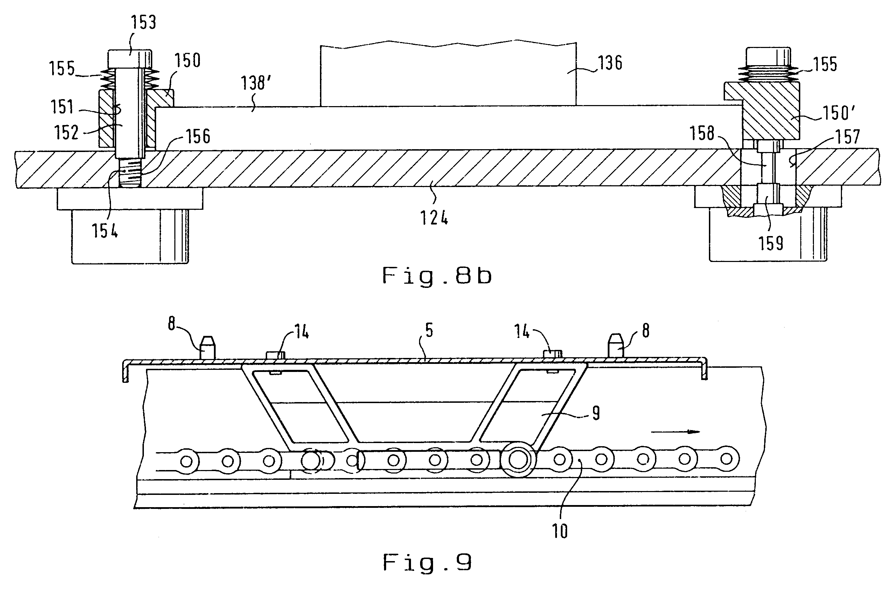

Einzelheiten dieser Einschubtechnik-Befestigung sind ausschnittsweise in Figur 8b dargestellt. Je eine profilierte Klemmleiste 150, 150' umfaßt je einen Randabschnitt einer Halteplatte 138, 138'; 143, 143' und preßt diese gegen eine Tischplatte des Untertisches 124 oder des Obertisches 123. Die Klemmleiste 150 kann eine Arretierstellung (linke Darstellung in Figur 8b) oder die Klemmleiste 150' kann eine Werkzeugwechsel-Stellung (rechte Darstellung in Figur 8b) einnehmen. In regelmäßigen Abständen erstrecken sich Bohrungen 151 in vertikaler Richtung durch die Klemmleisten 150, 150'. Je ein Bolzen 152 weist an einem Ende einen vorstehenden Kopf 153 und am anderen Ende einen Außengewindeabschnitt 154 auf. Die Bolzen 152 sind durch die Bohrungen 151 geführt und mit den Gewindeabschnitten 154 in passende Innengewindeabschnitte 156 eingeschraubt, die in der Platte 124 ausgespart sind. Eine Tellerfeder 155 ist zwischen Bolzenkopf 153 und Klemmleiste 150, 150' eingespannt und preßt die Klemmleiste 150, 150' gegen die Halteplatte 138.

Eine Anzahl Stempel 158 sind vorgesehen, um die Klemmleiste 150' aus der Fixierstellung gegen die Federkraft der Tellerfeder 155 in die Werkzeugwechsel-Stellung zu bringen. Diese Stempel 158 ragen durch Bohrungen 157 hindurch, die in der Platte 124 ausgespart sind, und wirken auf die Unterseite der Klemmleiste 150' ein. Jeder Stempel 158 ist mit je einem Kolben einer hydraulisch betätigbaren Kolben/Zylinder-Anordnung 159 verbunden. Jeder Stempel 158 wird nur dann in die Klemmleisten-Freigabestellung oder Werkzeugwechsel-Stellung verstellt und dort gehalten, wenn die Kolben/Zylinder-Anordnung 159 mit Druckmedium beaufschlagt ist.

Im Bereich der Durchfall-Schnittstanze 140 weist der Untertisch 124 eine Aussparung auf, in welcher ein pneumatisch betätigter Auswerfer 145 untergebracht ist, der einen vertikal verstellbaren Stempel 146 aufweist. Dieser Stempel 146 kann durch fluchtende Bohrungen in der Tischplatte der Untertisches 124, durch das Schneid- oder Stanzwerkzeug 141 und durch die angepaßte Matrize 142 der Durchfall-Schnittstanze 140 hindurchfahren und kann dabei ein aus der verformten Folie 4 ausgestanztes Stanzteil 4' in ein Stapelmagazin 147 hineinschieben, das in den Obertisch 123 eingesetzt ist. Das Stapelmagazin 147 ist im wesentlichen vertikal ausgerichtet und begrenzt einen Stapelkäfig, in welchem die Stanzteile 4' gesammelt werden. Von Zeit zu Zeit werden die Stanzteile 4' von einer Bedienungsperson aus dem Stapelkäfig entnommen. Das Stanzgitter verbleibt an der Palette 5, wird mit dieser in die Entnahmestation 160 befördert und gelangt dort in einen Sammelbehälter 163 (vgl. Figur 3).

Die Zentrierung der Paletten 5 an dem Schneid- oder Stanzwerkzeug 136 der Lochstanze und/oder an dem Schneid- oder Stanzwerkzeug 141 der Durchfall-Schnittstanze 140 erfolgt innerhalb der Stanzstation 120 in gleicher Weise, wie die Zentrierung der Paletten 5 am Formwerkzeug 51 innerhalb der Formstation 50.

Die Figur 9 zeigt schematisch die Befestigung einer Palette 5 an einer Transportkette 10. Ein aus Kunststoff bestehender Palettenhalter 9 ist drehbar an einem Glied der Kette 10 angebracht und hintergreift im Abstand dazu ein weiteres Kettenglied, so daß der Palettenhalter 9 auch der Bewegungsbahn am Umfang einer Umlenkrolle folgen kann. Eine rahmenartige, rechteckige Blechtafel ist mit Hilfe von schnell-lösbaren Befestigungsmitteln 14, beispielsweise Bajonettverschlüssen, am Palettenhalter 9 festgelegt. Von der Oberseite der Palette 5 stehen zwei Zentrierstifte 8 vertikal ab.

Die Figur 10 zeigt in perspektivischer Darstellung eine Formstation 50 und einen Abschnitt des durch die Formstation geführten Palettenstranges 6, sowie die daneben angeordnete Quelle 170 für Druckluft. Jede Palette 5 ist an ihren gegenüberliegenden Schmalseiten auf je einem Palettenhalter 9 abgestützt, der an je einem Kettenglied von je einer angetriebenen umlaufenden Kette 10 angebracht ist. Die beiden Ketten sind parallel im Abstand über die Umlenkrollen 11' und 11'' geführt. Zum Antrieb der angetriebenen Umlenkrolle 11' dient der Elektromotor 15. Ersichtlich wird der an den Ketten 10 angebrachte Palettenstrang 6 durch den Arbeitsraum zwischen oberem Formtisch 80 und unterem Formtisch 90 der Formstation 50 zugeführt. Im Abstand zum beweglichen Palettenstrang 6 ist je ein Kettenschutzgestell 12 angeordnet.

Seitlich neben der Formstation 50 befindet sich ein schematisch dargestellter Drucklufterzeuger 170, der einen innerhalb des Gehäuses 171 untergebrachten mehrstufigen Kompressor, einen Kondensationstrockner 172, eine Druckluft-Vorratsflasche 173, Druckminderungseinrichtungen 174 und übliche Regelungseinrichtungen 175 und Anzeigegeräte 176 aufweist. Eine - nicht dargestellte - Leitung führt zu den Steuerorganen 59 an der Formstation 50, um bei Bedarf Druckluft in die Formmulde 57 einzuführen, die in dem Formwerkzeug 51 ausgebildet ist.

**Patentansprüche**

1. Vorrichtung zur Hochdruckverformung von Kunststoff-Folien,
   mit einem durchgehenden Strang (6) verschieblicher, rahmenartiger Paletten (5), die von einem Förderer (11') schrittweise angetrieben werden, wobei jede Palette (5) nacheinander durchläuft:
   - eine Auflegestation (20), in welcher je eine zu verformende Folie (3) in definierter Anordnung auf je einer Palette (5) abgelegt wird, welche diese Folie (3) in dieser definierten Anordnung hält und schrittweise durch die weiteren Stationen transportiert;
   - eine Heizstation (40), in welcher jede zu verformende Folie (3) auf eine vorgegebene Folientemperatur erwärmt wird;
   - eine Formstation (50) mit einem oberen, im wesentlichen ortsfest angeordneten Formtisch (80) und mit einem unteren, verschieblich gehaltenen Formtisch (90), der eine Schließstellung benachbart zum oberen Formtisch (80) und eine Freigabestellung entfernt vom oberen Formtisch (80) einnehmen kann, an jedem Formtisch (80, 90) je eine Werkzeughälfte (52, 60) eines Formwerkzeugs (51) angebracht ist, das ein Werkzeug (64) aufweist, an dessen Kontur (65, 65', 65'') die Folie (3) angeformt werden soll, wobei

- in einer anfänglichen Freigabestellung eine Palette (5) mit einer zu verformenden Folie (3) zwischen die beiden im Abstand zueinander gehaltenen Werkzeughälften (52, 60) einschiebbar ist,

- in der Schließstellung die zu verformende Folie (3) zwischen den beiden Werkzeughälften (52, 60) eingespannt ist, diese Werkzeughälften (52, (60) druckdicht geschlossen sind, und in eine Formmulde (57) in der einen Werkzeughälfte (52) ein fluides Druckmittel einführbar ist, das die, eine Temperatur unterhalb der Kunststofferweichungstemperatur aufweisende Folie (3) unter einem Druckmitteldruck größer 20 bar an ein Werkzeug (64) und/oder an einen Formhohlraum in der anderen Werkzeughälfte (60) anformt, und

- in einer erneuten Freigabestellung die verformte Folie (4) von dem Formwerkzeug (64) gelöst, und die Palette (5) mit der verformten Folie (4) weitertransportiert wird;

- eine Entnahmestation (160), in welcher die verformte Folie (4) von der sie haltenden Palette (5) gelöst und in einer Sammeleinrichtung aufgenommen wird; und

- wahlweise wenigstens eine Stanzstation (120), die zwischen der Formstation (50) und der Entnahmestation (160) eingefügt ist.

2. Die Vorrichtung nach Anspruch 1,
   dadurch gekennzeichnet, daß
   jede Palette (5) im wesentlichen aus einer flachen, rahartigen rechteckigen Blechtafel besteht, an der wenigstens eine Aussparung (7) ausgebildet ist;
   die Palette (5) an den gegenüberliegenden Schmalseiten auf je einem Palettenhalter (9) aufliegt, dort mit lösbaren Befestigungsmitteln (14) festgelegt ist; und
   jeder Palettenhalter (9) an je einer parallel zueinander geführten, umlaufenden Kette (10) angebracht ist.

3. Die Vorrichtung nach Anspruch 2,
   dadurch gekennzeichnet, daß

von der Oberseite der Palette (5) wenigstens zwei Zentrierstifte (8) abstehen, die in passende Öffnungen oder Aussparungen an der zu verformenden Folie (3) eingreifen, um eine definierte Anordnung der Folie (3) bezüglich der Palette (5) zu gewährleisten.

4. Die Vorrichtung nach einem der Ansprüche 1 bis 3,
   dadurch gekennzeichnet, daß
   die Auflegestation (20) automatisiert ist und ein, eine Vielzahl von Folien (3) enthaltendes Magazin (21) sowie wenigstens einen schwenkbaren Arm (30) aufweist, an dem drehbar ein Saugerrohr (31) gelagert ist, das mit einer Anzahl Sauger (32) versehen ist, die pro Arbeitstakt eine Schwenkbewegung ausführen und jeweils die endständige Folie (3) packen, aus dem Magazin (21) entnehmen und auf der in der Auflegestation (20) befindlichen Palette (5) ablegen.

5. Die Vorrichtung nach einem der Ansprüche 1 bis 4,
   dadurch gekennzeichnet, daß
   die Heizstation (40) mehrere Paletten (5) mit je einer zu verformenden Folie (3) aufnehmen kann, und
   mehrere Heizfelder (41, 41', 41'') aufweist, die ihrerseits aus je einer Anzahl Infrarot-Flächenstrahlern (42, 42') aufgebaut sind;
   jedes Heizfeld (41, 41', 41'') wenigstens einige unabhängig ansteuerbare Infrarot-Flächenstrahler (42') aufweist;
   die Heizstation (40) wenigstens einen Pilotstrahler (43) aufweist, dessen Oberflächentemperatur in engen Grenzen gehalten wird; und
   dieser Pilotstrahler (43) Steuerimpulse zur Ansteuerung der unabhängig ansteuerbaren Infrarot-Flächenstrahler (42') liefert.

6. Die Vorrichtung nach Anspruch 5,
   dadurch gekennzeichnet, daß
   die Heizfelder (41, 41', 41'') an einem Heizkasten (44) angebracht sind, der bezüglich der Bewegungsbahn des Palettenstranges (6) höhenverstellbar angeordnet ist und zusätzlich in eine Ruhestellung seitlich neben der Bewegungsbahn des Palettenstranges (6) bringbar ist.

7. Die Vorrichtung nach Anspruch 6,
   dadurch gekennzeichnet, daß
   die Heizstation (40) zusätzlich einen Reflektor aufweist, der im Abstand zu den Heizfeldern (41, 41', 41'') angeordnet ist, wenn der Heizkasten (44) seine Ruhestellung einnimmt.

8. Die Vorrichtung nach einem der Ansprüche 1 bis 7,
dadurch gekennzeichnet, daß
die Formstation (50) eine Presse (70) mit einem Säulengestell aufweist, das seinerseits eine Anzahl vertikal ausgerichteter Säulen (71) aufweist;
der obere Formtisch (80) an diesen Säulen (71) im wesentlichen ortsfest befestigt ist und zu Justierzwecken in geringem Umfang in vertikaler Richtung verstellbar ist;
der untere Formtisch (90) längs dieser Säulen (71) verschieblich geführt ist; und
zur Verstellung des unteren Formtisches (90) ein Antrieb (100) vorgesehen ist, der einen Stirnrad-Getriebebremsmotor (101), einen Kurbelantrieb (102, 103), ein Pleuel (104) mit verschieblichem Pleuellager (105) und eine Doppel-Kniehebel-Anordnung (110) aufweist.

9. Die Vorrichtung nach Anspruch 8,
dadurch gekennzeichnet, daß
der Antrieb (100) für eine Formschließkraft von wenigstens 300 Mega-Newton ausgelegt ist.

10. Die Vorrichtung nach Anspruch 8,
dadurch gekennzeichnet, daß
am unteren Formtisch (90) eine untere Werkzeughälfte (60) fest angebracht ist, die eine Bodenplatte (63), ein Werkzeug (64) und eine gefederte Mutterform (66) aufweist, welche das Werkzeug (64) in engem Abstand umschließt.

11. Die Vorrichtung nach Anspruch 10,
dadurch gekennzeichnet, daß
an der Oberseite der Mutterform (66) eine nach außen offene, umlaufende Stufe (69) ausgebildet ist, deren Abmessungen an die Aussparung (7) innerhalb jeder Palette (5) angepaßt sind.

12. Die Vorrichtung nach Anspruch 11,
dadurch gekennzeichnet, daß
beim Anheben des unteren Formtisches (90) wenigstens ein Abschnitt dieser umlaufenden Stufe (69) in die Aussparung (7) innerhalb der Palette (5) hineingeschoben wird, dabei die Palette (5) zentriert und eine exakte Positionierung der zu verformenden Folie (3) bezüglich des Werkzeuges (64) gewährleistet wird.

13. Die Vorrichtung nach Anspruch 12,
dadurch gekennzeichnet, daß
beim Anheben des unteren Formtisches (90) auch die, die zu verformende Folie (3) haltende Palette (5) anhebbar ist, um eine Positiv-Verformung der Folie (3) durchzuführen.

14. Die Vorrichtung nach Anspruch 10,
dadurch gekennzeichnet, daß
die Mutterform (66) auf Federn (68) abgestützt ist, die sich beim Öffnen des Formwerkzeugs (51) entspannen, dabei die Mutterform (66) gegenüber dem Werkzeug (64) anheben und dabei die verformte Folie (4) vom Werkzeug (64) lösen bzw. entformen.

15. Die Vorrichtung nach einem der Ansprüche 1 bis 14,
dadurch gekennzeichnet, daß
die Entnahmestation (160) einen hin- und herführbaren Stempel (161) und eine Stapelrinne (162) aufweist;
die Paletten (5) mit den verformten Folien (4) auf einer im wesentlichen vertikal ausgerichteten Bewegungsbahn durch einen Spalt zwischen dem Stempel (161) und der Stapelrinne (162) geführt werden; und
bei jeder Hinbewegung des Stempels (161) eine verformte Folie (4) von der sie haltenden Palette (5) gelöst und in die Stapelrinne (162) eingeschoben wird.

16. Die Vorrichtung nach Anspruch 15,
dadurch gekennzeichnet, daß
die Stapelrinne (162) gegenüber der horizontalen Richtung leicht ansteigend ausgerichtet ist.

17. Die Vorrichtung nach einem der Ansprüche 1 bis 16,
dadurch gekennzeichnet, daß
die Stanzstation (120) ein Säulengestell mit einer Anzahl vertikal ausgerichteter Säulen (122) aufweist, an welchen ein Obertisch (123) im wesentlichen ortsfest angebracht ist und an welchen ein Untertisch (124) verschieblich geführt ist, der eine Freigabestellung entfernt zum Obertisch (123) einnehmen kann und ausgehend von dieser Freigabestellung eine Stanzstellung benachbart zum Obertisch (123) durchfährt, um dann erneut die Freigabestellung einzunehmen; und
am Untertisch (124) wenigstens eine Lochstanze (135) und/oder eine Durchfall-Schnittstanze (140) anbringbar ist, die in der Stanzstellung aus der in der Stanzstation (120) befindlichen verformten Folie (4) wenigstens einen gewünschten Abschnitt ausstanzt.

18. Die Vorrichtung nach Anspruch 17,
dadurch gekennzeichnet, daß
die Stanzstation (120) ein kombiniertes Stanzaggregat (121) aufweist, das mit einer Lochstanze (135) und mit einer Durchfall-Schnittstanze (140) ausgerüstet ist; und
das kombinierte Stanzaggregat (121) pro Arbeitstakt zwei Paletten (5) mit je einer verformten Folie (4) aufnehmen kann.

19. Die Vorrichtung nach Anspruch 18,
dadurch gekennzeichnet, daß
zur Verstellung des Untertisches (124) ein Antrieb (125) vorgesehen ist, der einen Getriebemotor (126), einen Kurbelantrieb (128, 129), ein Pleuel (130) mit vertikal verstellbarem Pleuellager (131) und eine Doppel-Kniehebel-Anordnung (132) aufweist; und
der Antrieb (125) für eine Stanzkraft von wenigstens 0,4 Mega-Newton ausgelegt ist.

20. Die Vorrichtung nach einem der Ansprüche 17 bis 19,
dadurch gekennzeichnet, daß
die Lochstanze (135) ein Schneid- oder Stanzwerkzeug (136) und ein Widerlager oder Gegenstück (137) aufweist;
die Durchfall-Schnittstanze (140) ein Schneid- oder Stanzwerkzeug (141) und ein Widerlager oder Gegenstück (142) aufweist;
sämtliche Werkzeugkomponenten (136, 137; 141, 142) mit Hilfe von Klemmleisten (150, 150') am Untertisch (124) oder am Obertisch (123) befestigbar sind; und
diese Klemmleisten (150, 150') mit Hilfe von Tellerfedern (155) in einer Werkzeug-Arretierstellung gehalten sind und mit Hilfe von pneumatisch betätigten Kolben/Zylinder-Anordnungen (158, 159) in eine Werkzeug-Wechselstellung bringbar sind.

21. Die Vorrichtung nach einem der Ansprüche 17 bis 20,
dadurch gekennzeichnet, daß
im Bereich der Durchfall-Schnittstanze (140) in den Untertisch (124) ein pneumatisch betätigter Auswerfer (145) mit einem vertikal verstellbaren Stempel (146) eingesetzt ist;
in den Obertisch (123) ein Stapelmagazin (147) eingesetzt ist, das einen Stapelkäfig begrenzt; und
der Stempel (146) bei jedem Stempelhub ein ausgestanztes Stanzteil (4') in den Stapelkäfig befördert.

22. Die Vorrichtung nach einem der Ansprüche 1 bis 21,
dadurch gekennzeichnet, daß
eine Quelle (170) für unter erhöhtem Druck gehaltenes fluides Druckmittel vorhanden ist, und
diese Druckmittelquelle (170) einen Drucklufterzeuger mit einem mehrstufigen Kompressor, einen Kondensationstrockner (172) und eine Druckluft-Vorratsflasche (173) aufweist und für einen Druckluftdruck von etwa 330 bar ausgelegt ist.

Fig. 1

Fig. 2

15

Fig.3

Fig. 4a

Fig. 4b

Fig.5

Fig.6a

Fig.6b

Fig. 6c

Fig.7a

Fig. 7b

Fig.8a

Fig.8b

Fig.9

Fig. 10

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 363 918 (QUESTECH VENTURES INC.) <br> * das ganze Dokument * <br> --- | 1 | B29C51/10 <br> B29C51/26 <br> B29C51/24 |
| A,D | EP-A-0 371 425 (BAYER A.G.) <br><br> * Zusammenfassung * <br> --- | 1,10,14, 22 | |
| A | WO-A-9 101 214 (VERSON HME LTD.) <br><br> * Zusammenfassung * <br> --- | 8,9, 17-21 | |
| A | EP-A-0 322 697 (TECNOFORM S.R.L.) <br> * Zusammenfassung * <br> --- | 1 | |
| A | GB-A-791 097 (RYBURN ENGINEERING CO.) <br> * das ganze Dokument * <br><br> ----- | 1 | |
| | | | **RECHERCHIERTE SACHGEBIETE (Int. Cl.5)** <br><br> B29C <br> B30B |

Der vorliegende Recherchenbericht wurde für alle Patentansprüche erstellt

| Recherchenort | Abschlußdatum der Recherche | Prüfer |
|---|---|---|
| DEN HAAG | 15 JUNI 1992 | SOZZI R. |

EPO FORM 1503 03.82 (P0403)